# EUROPEAN PATENT SPECIFICATION

(11) **EP 0 789 735 B1**
(45) Date of publication and mention of the grant of the patent: **15.12.1999**
(21) Application number: 95935516.5
(22) Date of filing: 31.10.1995
(51) Int. Cl.: C09J 5/08

(54) **FOAMED ADHESIVES AND METHOD OF APPLICATION**
GESCHÄUMTE KLEBSTOFFE UND VERWENDUNGSVERFAHREN
ADHESIFS MOUSSE ET PROCEDE D'APPLICATION

(30) Priority: 02.11.1994 GB 9422080; 04.08.1995 GB 9516050
(43) Date of publication of application: 20.08.1997
(73) Proprietor: EVODE LIMITED, Stafford, ST16 3EH (GB)
(72) Inventor: WARD, David, Staffordshire ST14 7QY (GB); MORRIS, John, Stafford ST17 4TW (GB)
(74) Representative: ffrench-Lynch, Cecil
(86) International application number: GB9502550
(87) International publication number: WO9614366

(56) References cited:
- DE-A- 4 021 863
- GB-A- 1 232 583
- US-A- 4 960 802
- DATABASE WPI Week 9233 Derwent Publications Ltd., London, GB; AN 92-272932 & JP,A,04 185 685 (MITSUI TOATSU) , 2 July 1992

## Description

The present invention relates to a foamed adhesive and a method of application of such a foamed adhesive. In particular, the present application relates to, for example, a hydrocarbon-foamed polychloroprene contact-adhesive and a process for applying a non-uniform coating of such an adhesive, for example by a comb, trowel or a roller, to a substrate. The invention further relates to a kit of parts for use in such a method of applying the foaming system.

Contact adhesives may be characterized by being coated onto both substrates to be joined and then being allowed to dry. There is a time window after the adhesive has dried during which the adhesive-coated substrates can be brought into contact and bonded. Contact adhesives are primarily used for laminate bonding. They are used both in industry and in the home.

Traditional contact adhesives are solvent-based. The products contain only 20% to 25% adhesive, the rest being composed of highly flammable solvent or chlorinated solvent vehicles which give off noxious fumes and are accordingly environmentally unfriendly. Aqueous contact adhesives were accordingly developed, wherein the adhesive is dispersed in a water base and spread uniformly over the surfaces to be contacted by way of a pad, brush or roller. However, aqueous adhesives have not been successful in the market place as they are not perceived to have the same bond strength as traditional solvent-based systems and suffer relatively long dry times.

It has now been discovered that foamed water-based adhesives can be spread on a substrate with a comb, a trowel or roller to provide increased surface coverage per volume of product, whilst having a high bond strength and dry times at least comparable with traditional solvent-based systems.

US-A-3565247 discloses a pressure-sensitive adhesive tape, the adhesive layer of which is a foam system.

GB-A-2135903 discloses a foamed-sensitive adhesive layer having a stable foam structure prepared by mixing a gas comprising oxygen with an aqueous dispersion comprising an unsaturated polyester, a pressure-sensitive adhesive component and an accelerator effective for oxidative curing of the polyester.

US-A-4561918 discloses a foamed vinyl acetate-ethylene copolymer-based adhesive for use in the production of corrugated products.

US-A-4960802 discloses an aqueous compact composition for use as a contact adhesive which can be applied as a coating to the surface of two substrates and then foamed and dried to provide a dry cellular adhesive coating. The contact adhesive may be based upon, for example, acrylic, styrene-butadiene or chloroprene polymers. The cellular structure may be obtained by mechanically frothing the aqueous adhesive composition prior to coating, in which case the blowing agent is air, or by the addition of a physical blowing agent, for example a hydrocarbon. There is no disclosure of combing the foam before allowing it to dry.

Japanese Patent Publication A-4185685, as reported in Derwent Abstract Accession No.92-272932, discloses the production of a foamed adhesive which gives advantages when used to adhere to wood. The adhesive is prepared by the addition of surfactants to amino resins, adjustment of the pH and the addition of a basic material.

DE-A-4021863 discloses the use of a foamed two component polyurethane adhesive to fix ceramic floor tiles, the adhesive being lightly brushed onto the undersurface of the tiles.

The present invention provides a process for applying a coating of foamed adhesive to a substrate, wherein a quantity of foamed adhesive is initially applied to the substrate, characterised in that a plurality of structurally time-stable grooves are generated in the foam.

The grooves may be generated in the foam by the use of a comb or a ridged roller.

The foamed adhesive has a long "window" time during which the substrates to be joined can be brought into contact. A much larger coverage is given in comparison with a non-foamed water-based adhesive whilst still maintaining the contact strength. The foamed adhesive used according to the present invention is structurally time-stable. The cellular structure of the foam does not collapse This maintains the "legging" of the foam for contact and also assists in evening out nonplanar surfaces for complete adhesion.

The foam used in the present product may be provided by an exterior foamer after application of the adhesive to the substrate, or, preferably, by an internal foamer.

The water-based adhesive composition for use in the present invention comprises an aqueous medium containing from 30 to 80 wt.% solid adhesive components, preferably 45 to 60 wt.%. The adhesive may be one known in the art, for example an acrylic, styrene-acrylic, styrene-butadiene, vinyl acetate, urethane or chloroprene polymer. The preferred aqueous adhesive copolymer emulsion for use in the foamable contact adhesive composition is a polychloroprene latex emulsion containing 50 to 60 wt.% solids.

The foamable adhesive used will preferably comprise an anionic surfactant and an amphoteric surfactant. The anionic surfactant serves to create the surface tension conditions necessary in the liquid to form the foam. The addition of an amphoteric surfactant has been found to produce a highly time-stable foam in the latex emulsion. The amphoteric surfactant also lowers the product viscosity. The surfactants may be present at a total of from 0.25 to 10 wt.% dry weight, preferably 1 to 5 wt.% dry weight. The ratio of anionic to amphoteric surfactant may range from 5:1 to 1:5 (as dry weight), preferably 1:3 to 3:1.

An internal-foamed system will contain from 1 to 10 wt.% of a foaming agent. Preferred foaming agents include halocarbons or hydrocarbons. Hydrocarbons such as butane are preferred. Chemical blowing agents may also be employed, such as inorganic carbonates and inorganic bicarbonates.

The adhesive composition will preferably contain a tackifier such as a natural or artificial resin or derivative thereof. The tackifier is preferably a rosin ester emulsion and may be present at from 15 to 50% dry weight, most preferably 20 to 25% dry weight.

The foamable adhesive composition used according to the invention may also contain other components such as fillers, acid acceptors, anti-oxidants, fungicides, bactericides, foam stabilizers and thickeners and perfumes.

The foamed adhesive may be applied to the substrates to be joined from a dispensing device such as a spray foam can and then spread over the surfaces of the substrates.

In another embodiment, the foamed adhesive is packaged in a tub or lidded bucket. In use, portions of the adhesive may be spooned out of the open tub or bucket, dropped onto the substrates to be joined and then spread over the surface of the substrates.

A preferred method for spreading the foamed adhesive is with a scraper. A mound of foamed adhesive is applied to the centre of the substrate surface and then spread out over that surface. The scraper may be in the form of a combined scraper/comb. The scraper is used firstly to level the foam consistently over the surface, whilst a comb edge on the scraper generates grooves.

A further method of spreading the adhesive on the surface is with a roller. The roller may have a number of ridges which produce a combed affect as the roller is pulled or pushed across the foam. Though a roller ribbed perpendicular to the direction of roll is preferred, a roller ribbed parallel to the direction of roll may also be used. It has also been found that the foamed adhesive may be spread with a roller such as may normally be employed to spread coarse finish paints over a surface, the roller being sufficiently coarse to generate stipples of foam uniformly distributed over the contact area.

The adhesive system used in the process according to the present invention has a number of advantages over adhesives of the prior art. Firstly, since there is a very low level of inflammable material and since the adhesive system is water-based, the composition is non-flammable. The adhesive is also fire resistive and can assist in the manufacture of fire barriers. The low level of solvent also reduces noxious smells and emissions.

The foam compositions also have a fast drying time. For example, it has been shown that systems used according to the present invention can take less than half the time of a conventional solvent-based adhesive to dry to a suitably "tacky" degree. However, a long contact window still occurs, e.g. 18 hours or more.

The compositions used in the present invention show an increase in coverage compared to other products known in the art. A conventional solvent-based adhesive will have a coverage of about 5 square metres per litre. An aqueous adhesive will have a coverage of about 15 square metres per litre. In comparison, a foamed adhesive according to the present invention will have a coverage of about 30 square metres per litre of unexpanded product. It has been discovered that the strength of bonding is not worsened by the inclusion of a foam system. Indeed, the increased contact area of the crushed foam leads to a stronger bond.

The foam compositions used in the present invention are structurally time-stable and do not collapse during drying. This assists in providing good contact between the surfaces to be joined.

The invention will now be described in further detail.

The following composition was prepared:-

| | **% Composition** |
|---|---|
| Tackifier ⁽¹⁾ | 20.6 |
| Zinc Oxide | 2.8 |
| Stabilizer | 1.3 |
| Antioxidant | 1.3 |
| Fungicide | 0.2 |
| Perfume | 0.1 |
| Polychloroprene Latex ⁽²⁾ | 70.0 |
| Amphoteric Surfactant | 0.7 |
| Anionic Surfactant | 1.8 |
| Foaming Agent | 1.2 |

| | |
|---|---|
| ⁽¹⁾ A rosin ester emulsion | |
| ⁽²⁾ An aqueous, colloidal dispersion of a polymer of 2-chlorobutadiene. The dispersion will contain 50%-60% solids. | |

The composition is loaded into a can. A foam applicator, similar to those known in the art, for example shaving foam cans, is attached. The can is shaken and a foam extruded onto the surfaces of the substrates to be joined.

The foam is then levelled over each surface using a scraper and then combed to generate grooves. The foam is then allowed to dry for from 5 to 20 minutes. The coated surfaces are brought into contact and pressed together.

The foam dries quickly, due to the retention of the foam structure, as water evaporates from the foam. The "bonding window" is thus open earlier than in an aqueous foam where amphoteric surfactant is not present. It is found that a strong bond will be formed even after 24 hours drying.

Testing shows that the substrates are firmly bonded together, but can be repositioned when making the bond. Contact adhesives of the art are very hard to reposition.

The accompanying Figures show two devices for spreading and applying ridges to the foam.

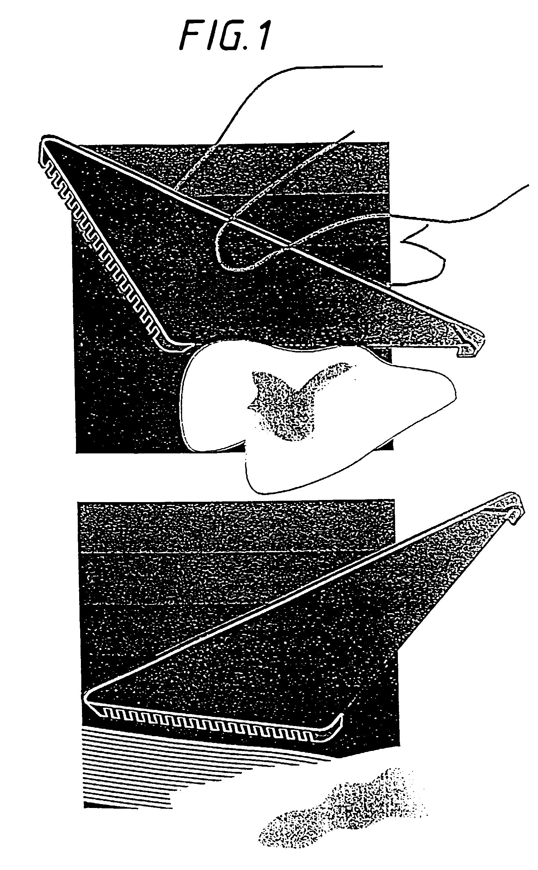

- Figure 1: shows a simple scraper which has a comb along one edge. The scraper is used first to level the foam consistently over the surface. Two spaces on the levelling edge facilitate this. The comb edge is then used to generate grooves.

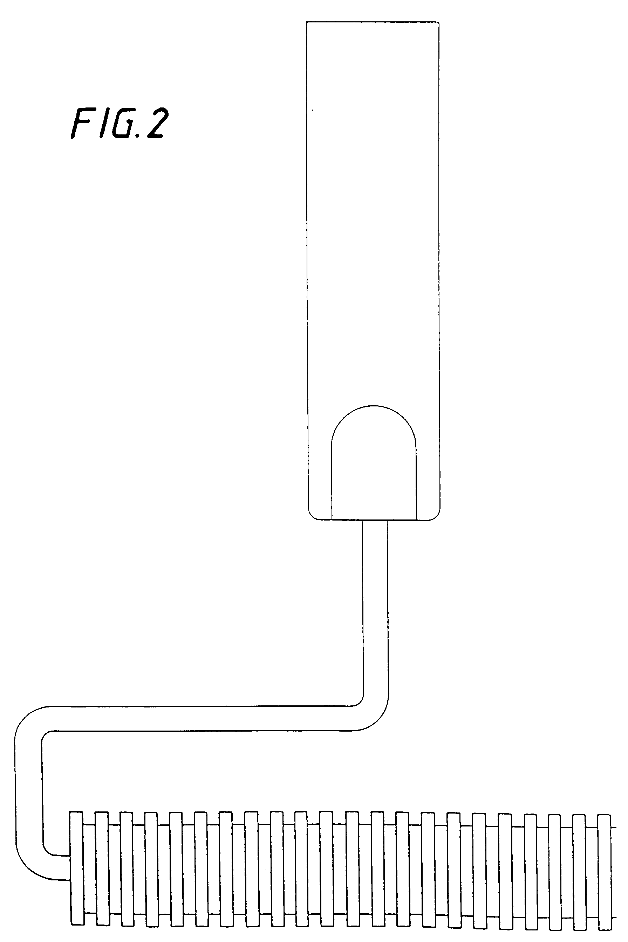

- Figure 2: shows a roller. This is run over the foam to both spread and groove the foam over the surface.

## Claims

1. A process for applying a coating of foamed adhesive to a substrate, wherein a quantity of foamed adhesive is initially applied to the substrate, characterised in that a plurality of structurally time stable grooves are generated in the foam.

2. A process as claimed in Claim 1 wherein the grooves are generated in the foam by means of a comb or a ridged roller.

3. A process as claimed in claim 1 or 2 wherein the grooves on the substrate surface are allowed to dry before contact with another like surface.

4. A process as claimed in any one of claims 1 to 3 wherein the adhesive is an aqueous foamable contact adhesive composition comprising a surfactant-containing aqueous emulsion of an adhesive and a foaming agent and wherein said adhesive comprises an amphoteric surfactant.

5. A process as claimed in claim 4 wherein the adhesive composition further comprises an anionic surfactant.

6. A process as claimed in Claim 5 wherein the ratio of anionic to amphoteric surfactant ranges from 5:1 to 1:5.

7. A process as claimed in any one of Claims 4 to 6 wherein said surfactant or surfactants are present in a total of from 0.25% to 10% dry weight.

8. A process as claimed in any preceding claim wherein the adhesive is an aqueous contact adhesive comprising an aqueous emulsion of an adhesive component selected from acrylic, styrene-acrylic, styrene-butadiene, urethane, vinyl acetate and chloroprene polymers.

9. A process as claimed in any preceding claim wherein the adhesive comprises a foaming agent selected from halocarbons and hydrocarbons.

10. A kit of parts for use in the process claimed in claim 1 comprising a container containing an aqueous adhesive and a foaming agent, or containing a foamed adhesive, means for spreading foam over the surface of the substrate and means for generating a plurality of grooves in the foam.

## Patentansprüche

1. Verfahren zum Aufbringen einer Beschichtung aus einem geschäumten Klebstoff auf ein Substrat, bei dem zuerst eine Menge geschäumter Klebstoff auf das Substrat aufgebracht wird, dadurch gekennzeichnet, daß eine Vielzahl von strukturell zeitstabilen Rillen in dem Schaum erzeugt wird.

2. Verfahren nach Anspruch 1, wobei die Rillen in dem Schaum mit Hilfe eines Kamms oder einer gerillten Walze erzeugt werden.

3. Verfahren nach Anspruch 1 oder 2, wobei man die Rillen auf der Substratoberfläche trocknen läßt, bevor es zum Kontakt mit einer anderen ähnlichen Oberfläche kommt.

4. Verfahren nach einem der Ansprüche 1 bis 3, wobei der Klebstoff eine wäßrige, schäumbare Kontaktklebstoff-Zusammensetzung ist, die eine einen grenzflächenaktiven Stoff enthaltende wäßrige Emulsion eines Klebstoffs und einen Schaumbilder umfaßt, und der Klebstoff einen amphoteren grenzflächenaktiven Stoff enthält.

5. Verfahren nach Anspruch 4, wobei die Klebstoffzusammensetzung ferner einen anionischen grenzflächenaktiven Stoff enthält.

6. Verfahren nach Anspruch 5, wobei das Verhältnis von anionischem zu amphoterem grenzflächenaktivem Stoff im Bereich von 5:1 bis 1:5 liegt.

7. Verfahren nach einem der Ansprüche 4 bis 6, wobei der grenzflächenaktive Stoff oder die grenzflächenaktiven Stoffe in einer Menge von insgesamt 0,25% bis 10%, bezogen auf das Trockengewicht, vorhanden sind.

8. Verfahren nach einem der vorhergehenden Ansprüche, wobei der Klebstoff ein wäßriger Kontaktklebstoff ist, der eine wäßrige Emulsion eines unter Acryl-, Styrol-Acryl-, Styrol-Butadien-, Urethan-, Vinylacetat- und Chloropren-Polymeren ausgewählten Klebstoffbestandteils enthält.

9. Verfahren nach einem der vorhergehenden Ansprüche, wobei der Klebstoff einen unter Halogenkohlenstoffen und Kohlenwasserstoffen ausgewählten Schaumbilder enthält.

10. Kit, der aus Teilen besteht, zur Verwendung in dem Verfahren nach Anspruch 1, der einen einen wäßrigen Klebstoff und einen Schaumbilder oder einen geschäumten Klebstoff enthaltenden Behälter, Einrichtungen zum Ausbreiten von Schaum auf der Oberfläche des Substrats und Einrichtungen zur Erzeugung einer Vielzahl von Rillen in dem Schaum umfaßt.

## Revendications

1. Procédé d'application d'un revêtement d'un adhésif expansé en mousse, sur un substrat, dans lequel une certaine quantité d'adhésif expansé en mousse est initialement appliquée sur le substrat, caractérisé en ce que plusieurs rainures à structure stable dans le temps sont générées dans la mousse.

2. Procédé selon la revendication 1, dans lequel les rainures sont générées dans la mousse à l'aide d'un peigne ou d'un cylindre nervuré.

3. Procédé selon la revendication 1 ou 2, dans lequel on laisse sécher les rainures formées sur la surface du substrat avant un contact avec une autre surface analogue.

4. Procédé selon l'une quelconque des revendications 1 à 3, dans lequel l'adhésif est une composition aqueuse adhésive par contact expansible en mousse, comprenant une émulsion aqueuse d'un adhésif et d'un agent moussant, contenant un tensioactif, et dans lequel ledit adhésif comprend un tensioactif amphotère.

5. Procédé selon la revendication 4, dans lequel la composition adhésive comprend en outre un tensioactif anionique.

6. Procédé selon la revendication 5, dans lequel le rapport entre tensioactifs anionique et amphotère, varie de 5:1 à 1:5.

7. Procédé selon l'une quelconque des revendications 4 à 6, dans lequel le ou les tensioactifs sont présents selon une quantité totale de 0,25 % à 10 % en poids à sec.

8. Procédé selon l'une quelconque des revendications précédentes, dans lequel l'adhésif est un adhésif aqueux de contact comprenant une émulsion aqueuse d'un composant adhésif choisi parmi les polymères acryliques, styrène-acryliques, styrène-butadiènes, d'uréthanne, d'acétate de vinyle et de chloroprène.

9. Procédé selon l'une quelconque des revendications précédentes, dans lequel l'adhésif comprend un agent moussant choisi parmi les halogénocarbures et les hydrocarbures.

10. Nécessaire de composants destiné à être utilisé dans le procédé de la revendication 1, comprenant un récipient contenant un adhésif aqueux et un agent moussant, ou contenant un adhésif expansé en mousse, des moyens pour étaler de la mousse sur la surface du substrat, et des moyens pour générer plusieurs rainures dans la mousse.
